# EUROPÄISCHE PATENTSCHRIFT

(11) **EP 3 225 012 B1**
(45) Veröffentlichungstag und Bekanntmachung des Hinweises auf die Patenterteilung: **09.01.2019**
(21) Anmeldenummer: 14833450.1
(22) Anmeldetag: 25.11.2014
(51) Int. Cl.: H04L 29/08

(54) **VERFAHREN ZUR KOMMUNIKATION ZWISCHEN ZUMINDEST ZWEI ENDGERÄTEN**
METHOD FOR COMMUNICATING BETWEEN AT LEAST TWO TERMINALS
PROCÉDÉ DE COMMUNICATION ENTRE AU MOINS DEUX APPAREILS TERMINAUX

(43) Veröffentlichungstag der Anmeldung: 04.10.2017
(73) Patentinhaber: Lang, Sebastian, 68804 Altlußheim (DE); Gabler, Philipp, 67149 Meckenheim (DE)
(72) Erfinder: Lang, Sebastian, 68804 Altlussheim (DE); Gabler, Philipp, 67149 Meckenheim (DE); Koo, Raim, Edinburgh EH11 1LT (GB)
(74) Vertreter: Patent- und Rechtsanwälte Ullrich & Naumann
(86) Internationale Anmeldenummer: PCT/DE2014/200653
(87) Internationale Veröffentlichungsnummer: WO 2016/082809

(56) Entgegenhaltungen:
- Nicole Hery-Moßmann: "Yak Messenger: Kostenlose WhatsApp-Alternative für iOS", , 15. November 2014 (2014-11-15), Seiten 1-2, XP055201546, Gefunden im Internet: URL:https://web.archive.org/web/2014111522 4317/http://beste-apps.chip.de/ios/app/yak -messenger-kostenlose-whatsapp-alternative -fuer-ios,334827828/ [gefunden am 2015-07-10]
- Nicole Hery-Moßmann: "Yak Messenger: Kostenlose WhatsApp-Alternative für iOS (Screenshot Nr. 3)", , 15. November 2014 (2014-11-15), Seiten 1-1, XP055201552, Gefunden im Internet: URL:https://web.archive.org/web/2014111522 4317/http://beste-apps.chip.de/ios/app/yak -messenger-kostenlose-whatsapp-alternative -fuer-ios,334827828/ [gefunden am 2015-07-10]
- Usman: "Vitrite - Change Windows Transparency To View Underlying Windows", , 8. März 2011 (2011-03-08), Seiten 1-3, XP055201573, Gefunden im Internet: URL:https://web.archive.org/web/2011030918 2529/http://www.addictivetips.com/windows- tips/vitrite-change-windows-transparency-t o-view-underlying-windows/ [gefunden am 2015-07-10]

## Beschreibung

Die Erfindung betrifft ein Verfahren zur Kommunikation zwischen zumindest zwei Endgeräten über ein Netzwerk. Verfahren der in Rede stehenden Art sind seit Jahren aus der Praxis bekannt. Beispielsweise ermöglichen sogenannte Chatprogramme bzw. Chatprotokolle die Kommunikation zwischen Nutzern zumindest zweier Endgeräte über Netzwerke wie das Internet. In der einfachsten Ausgestaltung werden dabei zwischen den Endgeräten Kommunikationsdaten in Form von reinen Textnachrichten ausgetauscht. Des Weiteren existieren Chatprogramme bzw. Chatprotokolle, die neben dem Austausch von Textnachrichten die Möglichkeit bieten, weitere Kommunikationsdaten zu übermitteln, beispielsweise Bilder, Video- bzw. Audiosequenzen oder die aktuellen Positionsdaten des Nutzers.

Die Kommunikationsdaten werden den Nutzern auf dem Graphic User Interface (GUI) des Displays ihres Endgeräts als Nachrichten dargestellt. Die Darstellung kann dabei je nach verwendetem Chatprogramm sowie Endgerät variieren.

Durch entsprechende Verfahren ist eine mitunter mobile, weltweite Kommunikation möglich.

Bei den bisher bekannten Verfahren zur Kommunikation zwischen zumindest zwei Endgeräten ist problematisch, dass diese heutzutage zwar eine zuverlässige Kommunikation ermöglichen, jedoch weitere Funktionen, die nicht die reine Übermittlung von Kommunikationsdaten betreffen, nicht gegeben werden. Insbesondere bei der Nutzung von mobilen Endgeräten ist der Nutzer aufgrund der geringen Größe des Endgeräts und der damit einhergehenden geringen Abmessung der Anzeigevorrichtung des Endgeräts während der Kommunikation auf die Darstellung der Kommunikationsdaten eingeschränkt.

In der im Internet abrufbaren Nicht-Patentliteratur "Yak Messenger: Kostenlose WhatsApp-Alternative für iOS" von Nicole Henry-Moßmann vom 15. November 2014 ist eine Softwareapplikation zur Kommunikation zwischen zwei Endgeräten beschrieben.

Die im Internet abrufbare Nicht-Patentliteratur "Vitrite - Change Windows Transparency To View Underlying Windows" von Usman vom 8. März 2011 offenbart eine Software zur transparenten Darstellung von Fenstern einer Windows-Anwendung.

Der vorliegenden Erfindung liegt daher die Aufgabe zugrunde, ein Verfahren zur Kommunikation zwischen zwei Endgeräten der eingangs genannten Art derart auszugestalten und weiterzubilden, dass mit technisch einfachen Mitteln eine Erweiterung der Funktionalität des Verfahrens für den Nutzer erreicht wird.

Erfindungsgemäß wird die voranstehende Aufgabe durch die Merkmale des Anspruches 1 gelöst. Danach sind ein erstes Endgerät mit einer Anzeigeeinrichtung, zumindest ein zweites Endgerät und eine Informationseinheit vorgesehen, wobei von der Informationseinheit Informationsdaten über das Netzwerk an das erste Endgerät übermittelt werden, wobei von dem zweiten Endgerät Kommunikationsdaten über das Netzwerk an das erste Endgerät übermittelt werden, wobei die Kommunikationsdaten in einer ersten visuellen Ebene der Anzeigeeinrichtung dargestellt werden und wobei die Informationsdaten in einer zweiten visuellen Ebene der Anzeigeeinrichtung dargestellt werden, wobei von einer Auswahleinheit (15) die an das erste Endgerät (1) zu übertragenden Informationsdaten (6) unter Berücksichtigung von Auswahldaten (7) ausgewählt werden, wobei die Auswahleinheit (15) durch eine über das Netzwerk kommunizierende externe Recheneinheit (8) umfassend einen Server (9) und mindestens eine Datenbank realisiert wird und wobei die Auswahldaten (7) von dem zweiten Endgerät (2) an die Auswahleinheit (15) übertragen werden, und wobei die Informationseinheit durch die externe Recheneinheit und/oder durch eine über das Netzwerk kommunizierende Rechnerinfrastruktur eines oder mehrerer Informationsanbieter realisiert wird.

In erfindungsgemäßer Weise ist zunächst erkannt worden, dass die Funktionalität eines Verfahrens zur Kommunikation zwischen zumindest zwei Endgeräten über ein Netzwerk in verblüffend einfacher Weise erweitert werden kann, indem neben dem ersten Endgerät und dem zweiten Endgerät eine Informationseinheit vorgesehen ist. Über die Informationseinheit können Informationsdaten an das erste Endgerät übermittelt werden, so dass neben dem reinen Austausch von Kommunikationsdaten nunmehr auch weitere - zumindest nicht unmittelbar die Kommunikation betreffende - Informationsdaten an das erste Endgerät übermittelt werden. Des Weiteren werden von dem zweiten Endgerät Kommunikationsdaten über das Netzwerk an das erste Endgerät übermittelt.

In weiter erfindungsgemäßer Weise ist erkannt worden, dass die Kommunikationsdaten und die Informationsdaten in besonders raffinierter Weise von der Anzeigeeinrichtung des ersten Endgeräts dargestellt werden können, indem die Kommunikationsdaten in einer ersten visuellen Ebene der Anzeigeeinrichtung dargestellt werden und die Informationsdaten in einer zweiten visuellen Ebene der Anzeigeeinrichtung dargestellt werden.

Dabei kann die erste visuelle Ebene in besonders vorteilhafter Weise für einen Betrachter der Anzeigeeinrichtung im Vordergrund der zweiten visuellen Ebene liegen. Die Informationsdaten werden bei einer derartigen Darstellung somit im Hintergrund der Kommunikationsdaten bzw. von den Kommunikationsdaten überlappend dargestellt. Die erste visuelle Ebene stellt bei dieser Ausführungsform somit das Graphic User Interface (GUI) dar, wohingegen die zweite visuelle Ebene einen Hintergrund des GUI bildet.

Alternativ ist denkbar, dass die zweite visuelle Ebene für einen Betrachter im Vordergrund der ersten visuellen Ebene liegt. Bei einer solchen Darstellung werden die Kommunikationsdaten im Hintergrund der Informationsdaten bzw. von den Informationsdaten überlappend dargestellt.

Auch ist denkbar, dass weitere visuelle Ebenen zur Anzeige von Daten vorgesehen sind.

Zur Vereinfachung der Darstellung können die Kommunikationsdaten der ersten visuellen Ebene zumindest teilweise transparent und/oder semitransparent dargestellt werden. Somit können die Kommunikationsdaten der ersten visuellen Ebene, die beispielsweise im Vordergrund erscheint, von einem Betrachter leicht erkannt - beispielsweise gelesen - werden, wobei die im Hintergrund, in der zweiten visuellen Ebene, dargestellten Informationsdaten für einen Betrachter nahezu uneingeschränkt wahrnehmbar sind, ohne dass die Kommunikationsdaten hierbei störend wirken.

Zur weiteren Optimierung der Wahrnehmbarkeit von Informationsdaten und Kommunikationsdaten kann die Darstellung der Farben und/oder der Helligkeit der Kommunikationsdaten in der ersten visuellen Ebene zumindest teilweise an die Darstellung der Farben und/oder der Helligkeit der Informationsdaten in der zweiten visuellen Ebene angepasst werden. Somit ist für einen Betrachter der Kontrast zwischen den Kommunikationsdaten, die die Informationsdaten überlappen, mit einfachen technischen Mitteln optimierbar, was zu einer erheblichen Verbesserung der Wahrnehmung von Kommunikationsdaten und Informationsdaten führt.

In vorteilhafter Weise kann es sich bei den Informationsdaten um eine Animation und/oder bewegte Bilder und/oder audiovisuelle Sequenzen, insbesondere Werbevideos, Videostreams, Filmtrailer etc. handeln. Dabei ist des Weiteren denkbar, dass der Nutzer während und/oder nach dem Durchlauf der audiovisuellen Sequenz die Möglichkeit erhält, weitere Informationen zu dem gerade abgespielten Werbevideo, Videostream, Filmtrailer etc. zu erhalten. Dabei kann beispielsweise ein Hyperlink in die audiovisuelle Sequenz eingebettet sein. Des Weiteren ist denkbar, dass der Nutzer während und/oder nach dem Durchlauf der audiovisuellen Sequenz mit der audiovisuellen Sequenz interagieren kann. Insbesondere kann vorgesehen sein, die audiovisuelle Sequenz anzuhalten, zu verwerfen, die Lautstärke anzupassen oder die Größe der Darstellung zu verändern. Alternativ oder ergänzend kann vorgesehen sein, dass von dem Nutzer die Transparenz und/oder die Farbe und/oder der Kontrast der Kommunikationsdaten und/oder der Informationsdaten verändert werden, nämlich zur Einstellung einer für den Nutzer idealen gleichzeitigen Wahrnehmung der Kommunikationsdaten und der Informationsdaten.

In weiter vorteilhafter Weise können die Informationsdaten im Vollbildmodus oder mit einer kleineren Größe und/oder mit einer kleineren Auflösung als die Auflösung der Anzeigeeinrichtung dargestellt werden. Somit ist in idealer Weise eine Anpassung der Darstellung an die Referenzen des Nutzers sowie an das verwendete Endgerät möglich.

Um den Nutzern eine möglichst vielseitige Kommunikation zu ermöglichen, kann es sich bei den Kommunikationsdaten um Nachrichten, insbesondere Textnachrichten, akustische Sequenzen, audiovisuelle Sequenzen, Bilder, Videoclips, Grafiken, aktuelle Positionsdaten der Nutzer und/oder Emoticons, handeln.

Des Weiteren ist denkbar, dass es sich bei dem ersten Endgerät und/oder dem zweiten Endgerät um einen Desktop-Computer, einen Laptop, ein Notebook, einen Tablet-Computer, ein Smartphone, ein PDA etc. handelt. Somit ist eine plattform- und endgeräteübergreifende Kommunikation möglich.

In erfindungsgemäßer Weise ist die Informationseinheit durch eine über das Netzwerk kommunizierende externe Recheneinheit umfassend einen Server und zumindest eine Datenbank und/oder durch eine über das Netzwerk kommunizierende Rechnerinfrastruktur eines oder mehrerer Informationsanbieter realisiert. Die Informationseinheit kann somit durch ein einzelnes oder durch mehrere Systeme realisiert werden. An dieser Stelle sei darauf hingewiesen, dass der Begriff "Rechnerinfrastruktur" im weitesten Sinne zu verstehen ist. Dabei kann es sich beispielsweise um die Infrastruktur eines Anbieters von Videosequenzen, eines Nachrichtendienstes, eines Wetterdienstes etc. handeln.

In weiter erfindungsgemäßer Weise werden die an das erste Endgerät zu übertragenden Informationsdaten von einer Auswahleinheit ausgewählt. Dabei wird die Auswahleinheit durch die externe Recheneinheit realisiert. In weiter erfindungsgemäßer Weise werden die von der Auswahleinheit an das erste Endgerät zu übertragenden Informationsdaten unter Berücksichtigung von Auswahldaten ausgewählt. Dabei werden die Auswahldaten von dem zweiten Endgerät an die Auswahleinheit übertragen.

In besonders vorteilhafter Weise kann es sich bei den Auswahldaten um persönliche Daten eines Nutzers des ersten Endgeräts handeln. Entsprechende persönliche Daten können beispielsweise Stammdaten, Bewegungsdaten, mitgeteilte oder beobachtete Daten sein. Des Weiteren kann es sich um statistisch ermittelte bzw. aufbereitete Daten nach dem sog. "Data Mining" handeln. Im Konkreten kann es sich bei den persönlichen Daten um die Adresse, das Geburtsdatum, die Religionszugehörigkeit, den aktuellen Aufenthaltsort, den Familienstand, Interessen, den Beruf, besuchte Webseiten, bewerteten Webseiten etc. des Nutzers handeln. Alternativ oder zusätzlich können als Auswahldaten von der Rechnerinfrastruktur bereitgestellte Daten, beispielsweise das aktuelle Wetter, aktuelle Veranstaltungen etc. herangezogen werden. Auch ist denkbar, dass alternativ oder zusätzlich zu den voranstehend genannten Daten auch Daten von einem Nutzer des zweiten Endgeräts als Auswahldaten Verwendung finden.

In weiter vorteilhafter Weise können das erste Endgerät und das mindestens eine zweite Endgerät unmittelbar miteinander kommunizieren - Peer 2 Peer. Ferner ist denkbar, dass das erste Endgerät und das mindestens eine zweite Endgerät mittelbar, beispielsweise über den Server der externen Recheneinheit, miteinander kommunizieren. An dieser Stelle sei ausdrücklich darauf hingewiesen, dass es sich bei dem erfindungsgemäßen Verfahren nicht zwangsweise um ein Verfahren zur Kommunikation zwischen zwei Endgeräten handelt. Vielmehr können an der Kommunikation beliebig viele Endgeräte teilnehmen. Dabei können an einige oder an sämtliche der an der Kommunikation teilnehmenden Endgeräte neben den Kommunikationsdaten auch Informationsdaten übermittelt werden. Die Auswahl der zu übermittelnden Informationsdaten erfolgt dabei wie voranstehend beschrieben. Das erfindungsgemäße Verfahren ist somit nicht auf ein einziges erstes Endgerät eingeschränkt. Mit anderen Worten können beliebig viele erste Endgeräte miteinander kommunizieren.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einem schematischen Blockbild ein Ausführungsbeispiel der Komponenten des erfindungsgemäßen Verfahren,
- Fig. 2: in einem schematischen Blockbild ein Ausführungsbeispiel eines Prozesses des erfindungsgemäßen Verfahrens,
- Fig. 3: in einem schematischen Blockbild ein Ausführungsbeispiel der Funktion einer erfindungsgemäßen Auswahleinheit und
- Fig. 4: in einer schematischen Darstellung ein Ausführungsbeispiel eines erfindungsgemäßen Endgeräts.

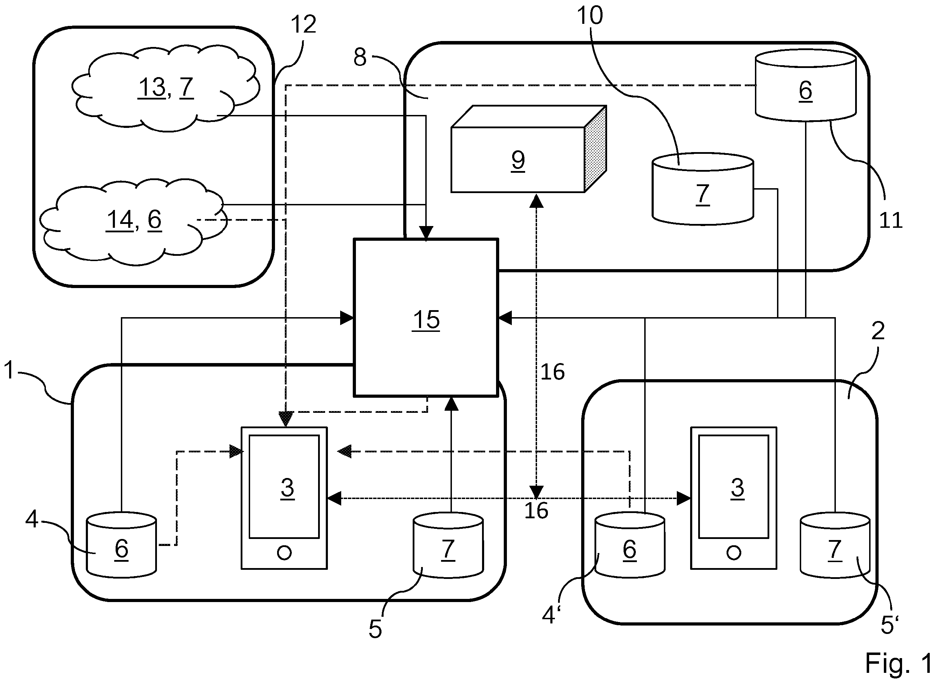

Fig. 1 zeigt in einem schematischen Blockbild ein Ausführungsbeispiel der Komponenten des erfindungsgemäßen Verfahrens. Das Verfahren dient zur Kommunikation zwischen einem ersten Endgerät 1 und zumindest einem zweiten Endgerät 2. Dabei ist wesentlich, dass beliebig viele weitere zweite Endgeräte 2 an der Kommunikation teilnehmen können.

Das erste Endgerät 1 und das zweite Endgerät 2 verfügen jeweils über eine Anzeigeeinrichtung 3 zur Darstellung von Daten. Des Weiteren weist das erste Endgerät 1 eine erste Datenbank 4 und eine zweite Datenbank 5 auf. In der ersten Datenbank 4 können Informationsdaten 6, beispielsweise Animationen und/oder bewegte Bilder und/oder audiovisuelle Sequenzen, wie Werbevideos, Videostreams, Filmtrailer etc. abgelegt sein. In der zweiten Datenbank 5 können persönliche Daten des Nutzers des ersten Endgeräts als Auswahldaten 7 abgelegt sein, beispielsweise Stammdaten und/oder Bewegungsdaten.

Das zweite Endgerät 2 weist ebenfalls eine erste Datenbank 4' und eine zweite Datenbank 5' auf. In der ersten Datenbank 4' des zweiten Endgeräts können Informationsdaten 6, beispielsweise Animationen und/oder bewegte Bilder und/oder audiovisuelle Sequenzen abgelegt sein. In der zweiten Datenbank 5' können weitere Daten des Nutzers des zweiten Endgeräts als Auswahldaten 7 abgespeichert sein.

Des Weiteren ist in Fig. 1 eine externe Recheneinheit 8 dargestellt. Die externe Recheneinheit 8 weist einen Server 9 sowie eine erste Datenbank 10 und eine zweite Datenbank 11 auf. Die erste Datenbank 10 kann persönliche Daten des Nutzers des ersten Endgeräts 1 als Auswahldaten 7 umfassen, beispielsweise Stammdaten und/oder Bewegungsdaten. Des Weiteren kann die erste Datenbank 10 der externen Recheneinheit 8 Daten des Nutzers des ersten Endgeräts 1 als Auswahldaten 7 enthalten, die der externen Recheneinheit 8 übermittelt, von dieser beobachtet oder statistisch ermittelt (sog. "data mining") worden sind.

Ferner ist in Fig. 1 eine Rechnerinfrastruktur 12 eines oder mehrerer Informationsanbieter dargestellt. Dabei kann es sich um Anbieter von Videoclips, um Nachrichtendienste, um Wetterdienste, um Veranstaltungsdienste etc. handeln. Durch die externe Rechnerinfrastruktur 12 werden externe Daten 13, insbesondere der aktuelle Wetterbericht, Veranstaltungen etc. als Auswahldaten 7 und/oder externe audiovisuelle Informationen 14, insbesondere Videoclips bzw. Werbevideos, als Informationsdaten 6 zur Verfügung gestellt.

Das erste Endgerät 1, das zweite Endgerät 2, die externe Recheneinheit 8 sowie die Rechnerinfrastruktur 12 können mit einer Auswahleinheit 15 kommunizieren. Die Auswahleinheit 15 kann durch das erste Endgerät 1 oder durch die externe Recheneinheit 8 realisiert werden.

Des Weiteren ist aus Fig. 1 erkennbar, dass die Kommunikation des ersten Endgeräts 1 mit dem zweiten Endgerät 2 entweder unmittelbar - Peer 2 Peer - oder mittelbar, d.h. über den Server 9 der externen Recheneinheit 8, erfolgen kann. Die von dem zweiten Endgerät 2 an das erste Endgerät 1 übermittelten Kommunikationsdaten 16 werden auf der Anzeigeeinrichtung 3 des ersten Endgeräts 1 dargestellt. Des Weiteren werden von der Auswahleinheit 15 anhand der Auswahldaten 7 die Informationsdaten 6 ausgewählt, die an das erste Endgerät 1 übermittelt und von der Anzeigeeinrichtung 3 dargestellt werden.

Während der Kommunikation zwischen dem ersten Endgerät 1 und dem zweiten Endgerät 2 werden Kommunikationsdaten 16 von dem zweiten Endgerät 2 an das erste Endgerät 1 übermittelt und auf der Anzeigeeinrichtung 3 dargestellt. Ferner werden Informationsdaten 6 des ersten Endgeräts 1 und/oder des zweiten Endgeräts 2 und/oder der externen Recheneinheit 8 und/oder der Rechnerinfrastruktur 12 von der Auswahleinheit 15 ausgewählt und auf der Anzeigeeinrichtung 3 des ersten Endgeräts 1 dargestellt. Das erste Endgerät 1 und/oder das zweite Endgerät 2 und/oder die externe Recheneinheit 8 und/oder die Rechnerinfrastruktur 12 können somit jeweils als Informationseinheit dienen.

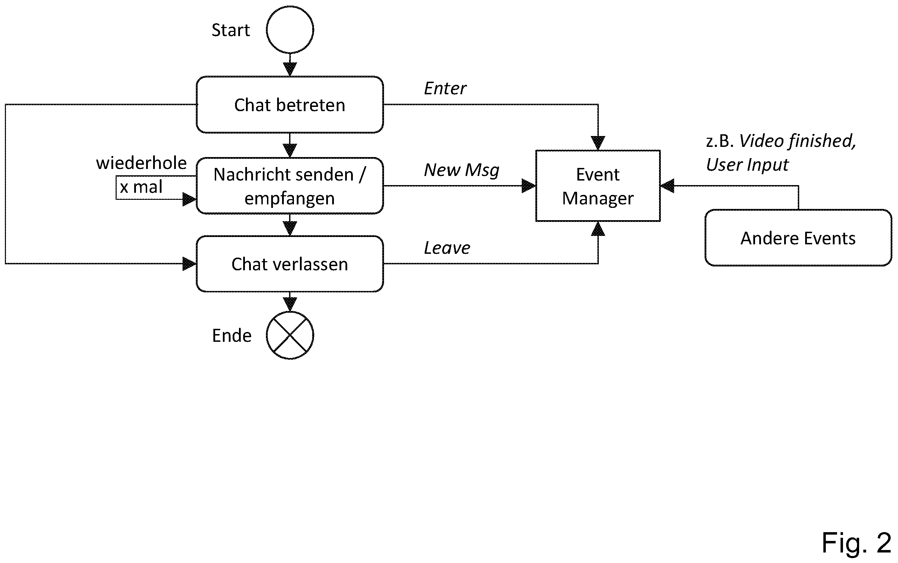

Fig. 2 zeigt in einem schematischen Blockbild ein Ausführungsbeispiel eines Prozesses des erfindungsgemäßen Verfahrens. Das Verfahren beginnt mit dem Betreten des Chats durch den Nutzer des ersten Endgeräts 1. Dabei wird ein Event "Enter" an einen Event Manager übermittelt. Während der Kommunikation des ersten Endgeräts 1 mit dem zweiten Endgerät 2, das heißt während des Chats, können Kommunikationsdaten 16 - insbesondere Nachrichten - zwischen den Endgeräten 1, 2 übermittelt werden. Bei jeder Übermittlung einer Nachricht wird ein Event "New Msg" and den Event Manager übermittelt.

Nach dem Verlassen des Chats, also dem Ende der Kommunikation zwischen dem ersten Endgerät 1 und dem zweiten Endgerät 2, wird ein Event "Leave" an den Event-Manager gesendet.

Während der Kommunikation kann der Event Manager auch Events abhören, die nicht die Kommunikation zwischen dem ersten Endgerät 1 und dem zweiten Endgerät 2 betreffen, beispielsweise ob von dem ersten Endgerät 1 und/oder dem zweiten Endgerät 2 die Darstellung von Informationsdaten 6 insbesondere einer audiovisuellen Information, wie ein Video oder ein Videostream beendet worden ist. In einem solchen Fall wird an den Event Manager das Event "Video finished" übermittelt. Ferner kann es sich bei einem solchen Event um eine andere, durch den Benutzer erfolgte, Eingabe handeln, so dass das Event "User Input" an den Event Manager übermittelt wird.

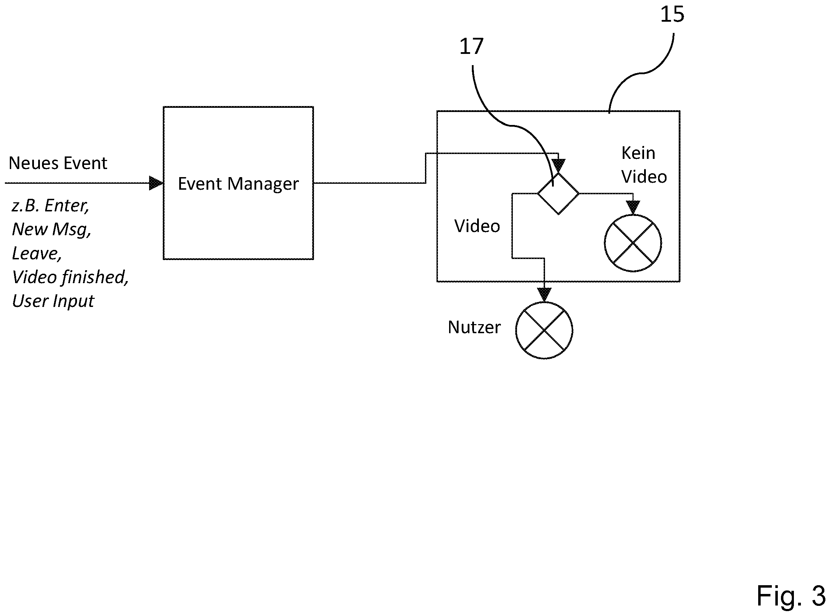

Fig. 3 zeigt in einem schematischen Blockbild ein Ausführungsbeispiel der Funktion einer erfindungsgemäßen Auswahleinheit 15. Dabei werden Events, die an den Event Manager übermittelt werden, von dem Event Manager an die Auswahleinheit 15 übermittelt. Der Auswahleinheit 15 werden ferner von dem ersten Endgerät 1 und/oder dem zweiten Endgerät 2 und/oder der externen Recheneinheit 8 und/oder der Rechnerinfrastruktur 12 Auswahldaten 7 übermittelt, was zur einfacheren Darstellung in Fig. 3 nicht gezeigt ist. Anhand der Events und der Auswahldaten 7 wird von einer Logik 17 in der Auswahleinheit 15 festgelegt, ob und welche Informationsdaten 6 dem ersten Endgerät 1 übermittelt werden.

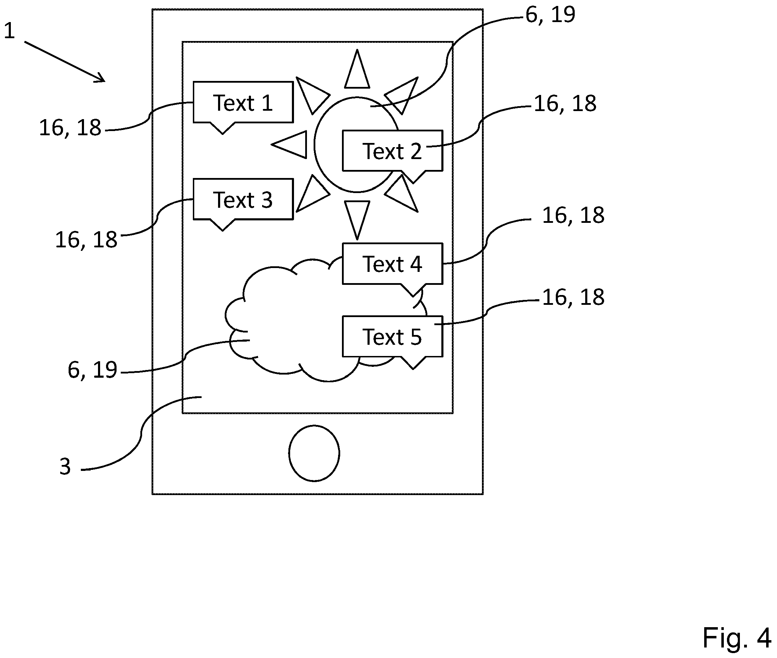

Fig. 4 zeigt in einer schematischen Darstellung ein Ausführungsbeispiel eines erfindungsgemäßen ersten Endgeräts 1 zur Durchführung des erfindungsgemäßen Verfahrens.

Das erste Endgerät 1 weist eine Anzeigeeinrichtung 3 zur Darstellung der Kommunikationsdaten 16 und der Informationsdaten 6 auf. Die Anzeigeeinrichtung 3 ist dabei derart ausgebildet, dass die Kommunikationsdaten 16 in einer ersten visuellen Ebene 18 und die Informationsdaten 6 in einer zweiten visuellen Ebene 19 angezeigt werden. Die zweite visuelle Ebene 19 liegt dabei für den Betrachter im Hintergrund der ersten visuellen Ebene 19. Somit überlappen die Kommunikationsdaten 16 zumindest teilweise die Informationsdaten 6.

Hinsichtlich weiterer vorteilhafter Ausgestaltungen des erfindungsgemäßen Verfahrens und der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: erstes Endgerät
- 2: zweites Endgerät
- 3: Anzeigeeinrichtung
- 4,4': erste Datenbank
- 5, 5': zweite Datenbank
- 6: Informationsdaten
- 7: Auswahldaten
- 8: externe Recheneinheit
- 9: Server
- 10: erste Datenbank
- 11: zweite Datenbank
- 12: Rechnerinfrastruktur
- 13: externe Daten
- 14: externe audiovisuelle Informationen
- 15: Auswahleinheit
- 16: Kommunikationsdaten
- 17: Logik
- 18: erste visuelle Ebene
- 19: zweite visuelle Ebene

## Patentansprüche

1. Verfahren zur Kommunikation zwischen zumindest zwei Endgeräten (1, 2) über ein Netzwerk, wobei ein erstes Endgerät (1) mit einer Anzeigeeinrichtung (3), zumindest ein zweites Endgerät (2) und eine Informationseinheit vorgesehen sind, wobei von der Informationseinheit Informationsdaten (6) über das Netzwerk an das erste Endgerät (1) übermittelt werden, wobei von dem zweiten Endgerät (2) Kommunikationsdaten (16) über das Netzwerk an das erste Endgerät (1) übermittelt werden, wobei die Kommunikationsdaten (16) in einer ersten visuellen Ebene (18) der Anzeigeeinrichtung (3) dargestellt werden und wobei die Informationsdaten (6) in einer zweiten visuellen Ebene (19) der Anzeigeeinrichtung (3) dargestellt werden,
**dadurch gekennzeichnet, dass** von einer Auswahleinheit (15) die an das erste Endgerät (1) zu übertragenden Informationsdaten (6) unter Berücksichtigung von Auswahldaten (7) ausgewählt werden, wobei die Auswahleinheit (15) durch eine über das Netzwerk kommunizierende externe Recheneinheit (8) umfassend einen Server (9) und mindestens eine Datenbank realisiert wird und wobei die Auswahldaten (7) von dem zweiten Endgerät (2) an die Auswahleinheit (15) übertragen werden, und dass die Informationseinheit durch die externe Recheneinheit (8) und/oder durch eine über das Netzwerk kommunizierende Rechnerinfrastruktur (12) eines oder mehrerer Informationsanbieter realisiert wird.

2. Verfahren nach Anspruch 1, **dadurch gekennzeichnet, dass** die Kommunikationsdaten (16) in der ersten visuellen Ebene (18) zumindest teilweise transparent und/oder semitransparent dargestellt werden.

3. Verfahren nach Anspruch 1 oder 2, **dadurch gekennzeichnet, dass** die Darstellung der Farben und/oder der Helligkeit der Kommunikationsdaten (16) in der ersten visuellen Ebene (18) zumindest teilweise an die Darstellung der Farben und/oder der Helligkeit der Informationsdaten (6) in der zweiten visuellen Ebene (19) angepasst wird.

4. Verfahren nach einem der Ansprüche 1 bis 3, **dadurch gekennzeichnet, dass** es sich bei den Informationsdaten (6) um Animationen und/oder bewegte Bilder und/oder audiovisuelle Sequenzen, insbesondere Werbevideos, Videostreams oder Filmtrailer, handelt.

5. Verfahren nach einem der Ansprüche 1 bis 4, **dadurch gekennzeichnet, dass** die Informationsdaten (6) im Vollbildmodus oder mit einer kleineren Größe und/oder mit einer kleineren Auflösung als die Auflösung der Anzeigeeinrichtung (3) dargestellt werden.

6. Verfahren nach einem der Ansprüche 1 bis 5, **dadurch gekennzeichnet, dass** es sich bei den Kommunikationsdaten (16) um Nachrichten, insbesondere Textnachrichten, akustische Sequenzen, audiovisuelle Sequenzen, Bilder, Videoclips, Graphiken, aktuelle Positionsdaten des Nutzers und/oder Emoticons, handelt.

7. Verfahren nach einem der Ansprüche 1 bis 6, **dadurch gekennzeichnet, dass** es sich bei dem ersten Endgerät (1) und/oder dem zweiten Endgerät (2) um einen Desktop-Computer, einen Laptop, ein Notebook, einen Tablet-Computer, ein Smartphone oder einen PDA handelt.

8. Verfahren nach einem der Ansprüche 1 bis 7, **dadurch gekennzeichnet, dass** es sich bei den Auswahldaten (7) um persönliche Daten eines Nutzers des ersten Endgeräts (1), beispielsweise Adresse, Geburtsdatum, Religionszugehörigkeit, aktueller Aufenthaltsort, Familienstand, Interessen, Beruf, besuchte Webseiten oder bewertete Webseiten, und/oder um von der Rechnerinfrastruktur (12) bereitgestellte Daten, beispielsweise Wetter oder aktuelle Veranstaltungen, und/oder um Daten von einem Nutzer des zweiten Endgeräts (2) handelt.

9. Verfahren nach einem der Ansprüche 1 bis 8, **dadurch gekennzeichnet, dass** das erste Endgerät (1) und das mindestens eine zweite Endgerät (2) mittelbar über die externe Recheneinheit (8) oder unmittelbar miteinander kommunizieren.

## Claims

1. Method for communication between at least two terminals (1, 2) via a network, wherein a first terminal (1) having a display device (3), at least a second terminal (2) and an information unit are provided, wherein from the information unit information data (6) are transmitted via the network to the first terminal (1), wherein from the second terminal (2) communication data (16) are transmitted via the network to the first terminal (1), wherein the communication data (16) are displayed in a first visual plane (18) of the display device (3) and wherein the information data (6) are displayed in a second visual plane (19) of the display device (3), **characterised in that** from a selection unit (15) the information data (6) which are intended to be transmitted to the first terminal (1) are selected taking into account selection data (7), wherein the selection unit (15) is produced by means of an external computer unit (8) which communicates via the network and which comprises a server (9) and at least one database and wherein the selection data (7) from the second terminal (2) are transmitted to the selection unit (15), and **in that** the information unit is produced by means of the external computer unit (8) and/or by means of a computer infrastructure (12) of one or more information providers which communicates via the network.

2. Method according to claim 1, **characterised in that** the communication data (16) in the first visual plane (18) are displayed at least partially in a transparent and/or semitransparent manner.

3. Method according to claim 1 or 2, **characterised in that** the display of the colours and/or the brightness of the communication data (16) in the first visual plane (18) is at least partially adapted to the illustration of the colours and/or brightness of the information data (6) in the second visual plane (19).

4. Method according to any one of claims 1 to 3, **characterised in that** the information data (6) are animations and/or moving images and/or audiovisual sequences, in particular promotional videos, video streams or film trailers.

5. Method according to any one of claims 1 to 4, **characterised in that** the information data (6) are displayed in full image mode or with a smaller size and/or with a lower resolution than the resolution of the display device (3).

6. Method according to any one of claims 1 to 5, **characterised in that** the communication data (16) are news items, in particular text news items, acoustic sequences, audiovisual sequences, images, video clips, graphics, current position data of the user and/or emoticons.

7. Method according to any one of claims 1 to 6, **characterised in that** the first terminal (1) and/or the second terminal (2) is/are a desktop computer, a laptop, a notebook, a tablet computer, a Smartphone or a PDA.

8. Method according to any one of claims 1 to 7, **characterised in that** the selection data (7) are personal data of a user of the first terminal (1), for example, address, data of birth, religion, current place of residence, family status, interests, occupation, websites visited or rated websites, and/or data provided by the computer infrastructure (12), for example, weather or current events and/or data from a user of the second terminal (2).

9. Method according to any one of claims 1 to 8, **characterised in that** the first terminal (1) and the at least one second terminal (2) communicate indirectly via the external computer unit (8) or directly with each other.

## Revendications

1. Procédé de communication entre au moins deux terminaux (1, 2) par l'intermédiaire d'un réseau, un premier terminal (1) avec un dispositif d'affichage (3), au moins un deuxième terminal (2) et une unité d'information étant prévus, l'unité d'information permettant de transmettre des données d'information (6) au premier terminal (1) par l'intermédiaire du réseau, des données de communication (16) étant transmises par le deuxième terminal (2) au premier terminal (1) par l'intermédiaire du réseau, les données de communication (16) étant représentées dans un premier plan visuel (18) du dispositif d'affichage (3) et les données d'information (6) étant représentées dans un deuxième plan visuel (19) du dispositif d'affichage (3),
**caractérisé en ce qu'**une unité de sélection (15) sélectionne les données d'information (6) à transmettre au premier terminal (1) en tenant compte de données de sélection (7), l'unité de sélection (15) étant constituée d'une unité de calcul externe (8) communiquant par l'intermédiaire du réseau, comprenant un serveur (9) et au moins une base de données et les données de sélection (7) étant transmises par le deuxième terminal (2) à l'unité de sélection (15) et **en ce que** l'unité d'information est constituée de l'unité de calcul externe (8) et/ou d'une infrastructure de calculateur (12), communiquant par l'intermédiaire du réseau, d'un ou plusieurs fournisseurs d'informations.

2. Procédé selon la revendication 1, **caractérisé en ce que** les données de communication (16) sont représentées dans le premier plan visuel (18) de manière au moins partiellement transparente et/ou semi-transparente.

3. Procédé selon la revendication 1 ou 2, **caractérisé en ce que** la représentation des couleurs et/ou de la luminosité des données de communication (16) dans le premier plan visuel (18) est adaptée au moins partiellement à la représentation des couleurs et/ou de la luminosité des données d'information (6) dans le deuxième plan visuel (19).

4. Procédé selon l'une des revendications 1 à 3, **caractérisé en ce que** les données d'information (6) sont des animations et/ou des images animées et/ou des séquences audiovisuelles, plus particulièrement des vidéos publicitaires, des flux vidéos ou des bandes annonces de films.

5. Procédé selon l'une des revendications 1 à 4, **caractérisé en ce que** les données d'information (6) sont représentées en mode plein écran ou avec une taille plus petite et/ou avec une résolution plus faible que la résolution du dispositif d'affichage (3).

6. Procédé selon l'une des revendications 1 à 5, **caractérisé en ce que** les données de communication (16) sont des messages, plus particulièrement des messages textuels, des séquences acoustiques, des séquences audiovisuelles, des images, des clips vidéos, des graphiques, des données de positionnement actuelles de l'utilisateur et/ou des émoticônes.

7. Procédé selon l'une des revendications 1 à 6, **caractérisé en ce que** le premier terminal (1) et/ou le deuxième terminal (2) est un ordinateur de bureau, un ordinateur portable, un notebook, une tablette, un smartphone ou un PDA.

8. Procédé selon l'une des revendications 1 à 7, **caractérisé en ce que** les données de sélection (7) sont des données personnelles d'un utilisateur du premier terminal (1), par exemple l'adresse, la date de naissance, l'appartenance religieuse, le lieu de séjour actuel, la situation familiale, les intérêts, le métier, des pages Web visitées ou les pages Web évaluées et/ou des données mises à disposition par l'infrastructure de calculateur (12), par exemple la météo ou les manifestations actuelles et/ou des données provenant d'un utilisateur du deuxième terminal (2).

9. Procédé selon l'une des revendications 1 à 8, **caractérisé en ce que** le premier terminal (1) et l'au moins un deuxième terminal (2) communiquent entre eux de manière indirecte par l'intermédiaire de l'unité de calcul externe (8) ou directement.
